# EUROPEAN PATENT APPLICATION

(11) **EP 1 164 504 A2**
(43) Date of publication of application: **19.12.2001**
(21) Application number: 01113905.2
(22) Date of filing: 07.06.2001
(51) Int. Cl.: G06F 17/30

(54) **System for broadcasting requested pieces of music utilizing information system**

(30) Priority: 16.06.2000 JP 2000181317
(71) Applicant: E.A.U. Co., Ltd., Tokyo 106-0032 (JP)
(72) Inventor: Hayashi, Yasuji, Tokyo 106-0032 (JP); Nakaya, Koji, Tokyo 106-0032 (JP)
(74) Representative: Hirsch, Peter, Dipl.-Ing.

(57) **Abstract**

There is provided a system for broadcasting requested pieces of music utilizing an information system in which operators for receiving requests for pieces of music for a broadcast program are eliminated when receiving the requests; classified totals of pieces of music requested by users with personal computers and portable telephones are computed according to predetermined rules; and, for example, pieces of music receiving many votes are selected with one click and broadcasted. User terminals and a web server are connected through the internet; a database in which data of pieces of music that can be requested are stored is connected to said web server; a broadcasting system for transmitting sounds, images, pieces of music, texts, and so on and a computer for a staff are connected to said database through a management server; selections from among said pieces of music requested by said terminals are received by said web server; classified totals are computed by said management server; and pieces of music selected with one click or automatically at said computer for the staff are broadcasted by said broadcasting system.

## Description

### BACKGROUND OF THE INVENTION

### 1. Field of the Invention

The present invention relates to a system for broadcasting requested pieces of music utilizing an information system which allows pieces of music requested by users(listeners) to be quickly and easily broadcasted using a computer network such as Internet, and more particularly to a system for broadcasting requested pieces of music utilizing an information system in which classified totals of pieces of music requested from personal computers and cellular phones (e.g., i-mode) adapted to Internet are computed according to predetermined rules and in which pieces of music are selected with one click or automatically and broadcasted from a studio.

### 2. Description of the Prior Art

Disc jockeys (hereinafter referred to as "DJs") of radio broadcast programs have been popular primarily among young people and, in DJ programs, the broadcast of requested pieces of music is often accompanied by the broadcast of messages from the listeners, which is done from the viewpoint of the growth of a sense of intimacy with the listeners.

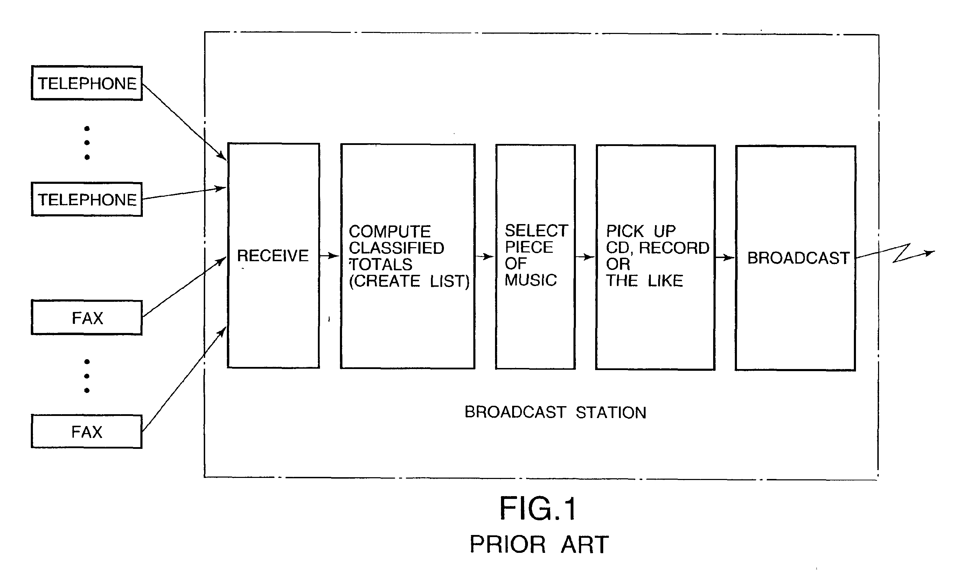

FIG. 1 shows how a conventional DJ program proceeds. A broadcast station receives requests from listeners sent using telephones or facsimiles, computes classified totals of requested pieces of music and then creates a list of the same. In the case of reception using the telephones, a great number of operators(telephone receptionists) are stationed to receive requests for pieces of music from a great number of listeners smoothly. A DJ personality or the like selects pieces of music to be broadcasted with reference to the created list, and a staff of the broadcast station picks up CDs, records, tapes or the like according to the selection to broadcast the pieces of music.

While some music programs on television invite requests for pieces of music from viewers and broadcast pieces of music in great request, reception of requested pieces of music is presently carried out using telephones or facsimiles as in the case of radios.

When the requested pieces of music are accepted in a conventional manner as described above, it is required to have a great number of operators and staffs for reception on the telephone, and many troubles occur including calls to wrong phone and facsimile numbers. In particular, calls to wrong phone numbers at mid night are very much troublesome, and there are strong demands for a solution to the same.

### SUMMARY OF THE INVENTION

The present invention has been made in view of the above-described situation, and it is an object of the present invention to provide a system for broadcasting requested pieces of music utilizing an information system that is adapted to Internet society, and more particularly to provide a system for broadcasting requested pieces of music utilizing an information system in which requests for pieces of music for a broadcast program are received without operators when receiving the requests; classified totals of pieces of music requested by users(listeners or viewers) with personal computers and cellular phones adapted to Internet are computed according to predetermined rules; and, for example, pieces of music receiving many votes are selected with one click and broadcasted.

The present invention relates to a system for broadcasting requested pieces of music utilizing an information system such as Internet, and the above-described object of the present invention is achieved by connecting user terminals and a web server through Internet, connecting a database in which data of pieces of music that can be requested are stored to said web server, connecting a broadcasting system for transmitting sounds, images, pieces of music, texts and so on and a computer for a staff to said database through a management server, receiving selections from among said pieces of music requested by said terminals at said web server, computing classified totals of the same at said management server, and broadcasting pieces of music selected at said computer for the staff with one click or automatically with said broadcasting system.

The above-described object of the present invention is more effectively achieved by making said requests with buttons for voting for requested pieces of music displayed on screens of said terminals, writing and inputting names, addresses, ages and messages at the time of said requests, transmitting the times of requests, information on requested pieces of music, messages and so on by mail to said computer for the staff when said requests are received, computing said classified totals of pieces of music for each genre and broadcasting pieces of music in each genre specified by said computer for the staff, transmitting the dates and times of broadcasts and the like to the requesters by mail when said pieces of music are broadcasted, or by connecting a printer to said management server to print data associated with said broadcasted pieces of music.

### BRIEF DESCRIPTION OF THE DRAWINGS

In the accompanying drawings:
FIG. 1 shows how a conventional broadcast proceeds according to requests;
FIG. 2 is a block configuration diagram showing a basic concept of the present invention;
FIG. 3 is a flow chart showing an example of a requesting operation at a user according to the present invention;
FIG. 4 is an illustration showing an example of buttons for voting for requested pieces of music;
FIG. 5 is an illustration showing an example of a user information writing screen;
FIG. 6 is a flow chart showing an example of an operation of selecting a piece of music according to the present invention;
FIG. 7 is an illustration showing an example of a screen for a staff according to the present invention;
FIG. 8 is a flow chart showing an example of an operation of broadcasting a piece of music;
FIG. 9 is an illustration showing examples of waveforms of music registered in a database; and
FIG. 10 is a flow chart showing an operation of printing logged data.

### DESCRIPTION OF THE PREFERRED EMBODIMENTS

According to the present invention, the man power and cost of a broadcast station is reduced by limiting the reception of requested pieces of music from users(listeners) to personal computers connected to Internet or personal computers or cellular phones adapted to Internet to put a limit on methods for requesting. For this purpose, according to the present invention, data associated with pieces of music that can be requested are registered in a database of a web server connected to Internet, and users can easily request the registered pieces of music by clicking buttons for voting on a screen, for example. Classified totals of requested pieces of music are automatically computed real-time and are organized into a list, for example, in the order of votes, and the pieces of music can be broadcasted by selecting them from the list with one click. Data of broadcasted pieces of music are written in the database in the form of the dates and times when they are played, the data being provided to the requesters and printed to be reported to JASRAC(Japanese Society for Rights of Authors, Composers and Publishers), for example in Japan.

A description will now be made with reference to the drawings on a system for broadcasting requested pieces of music utilizing an information system according to the present invention.

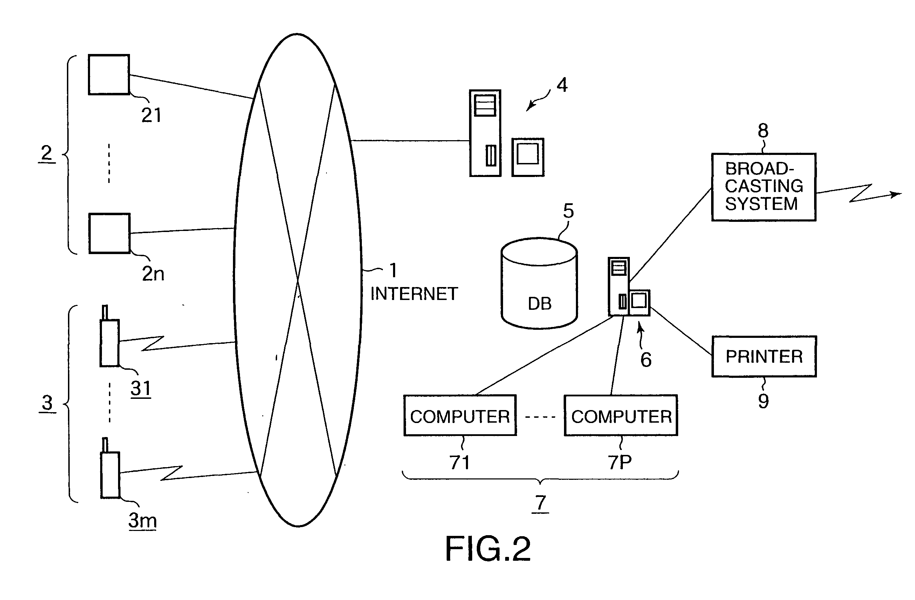

FIG. 2 shows a conceptual configuration of the present invention in the form of a block diagram in which a multiplicity of user terminals(personal computers) 2 (21 through 2n) are connected to an Internet 1 as a computer network to which cellular phones 3 (31 through 3m) adapted to Internet 1 can be also connected. A web server 4 managed and operated by a broadcaster or the like is connected to Internet 1, and a database 5 in which titles, music and so on associated with pieces of music that can be requested are stored is connected to the web server 4. A management server 6 having an interface function is connected to the database 5, and connected to the management server 6 are a broadcasting system 8 constituted by a computer or the like for broadcasting sounds, images, pieces of music, texts and so on to users, computers 7 (71 through 7p) for a staff installed in a studio and operated by a DJ or a production staff to broadcast pieces of music and so on, and a printer 9 for printing and outputting required data. The computers 7 for the staff, the broadcasting system 8 and the printer 9 are connected to each other through the management server 6 and the database 5.

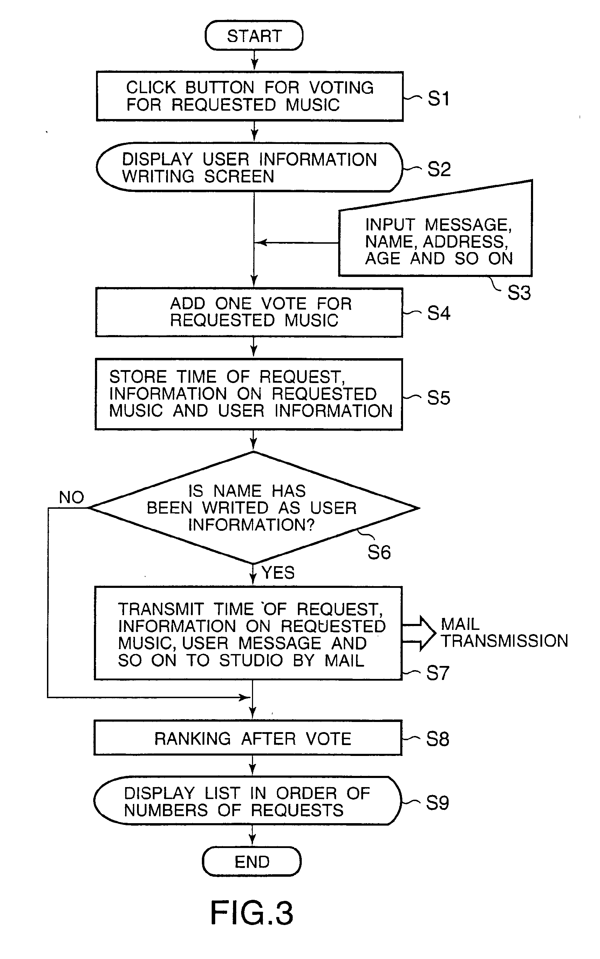

A requesting operation in such a configuration will now be described with reference to the flow chart in FIG. 3.

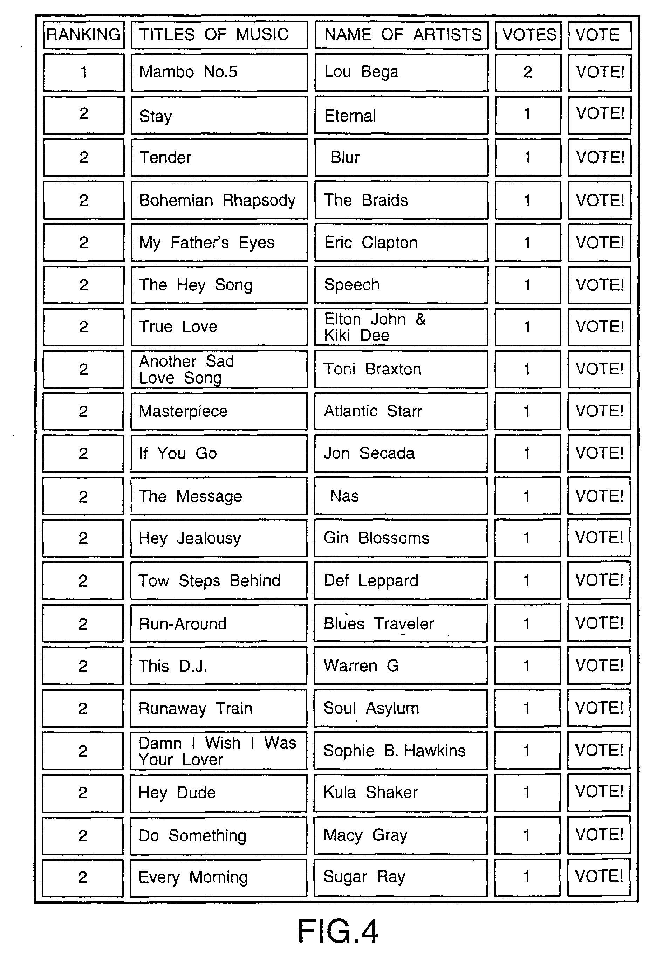

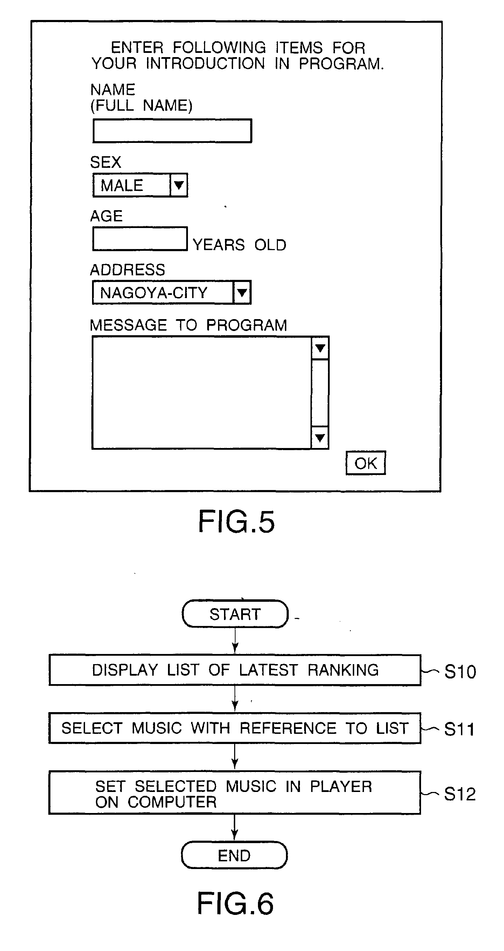

When a home page of the web server 4 is accessed by the terminal (personal computer) 2 or the cellular phone 3 of a user who is a radio listener, buttons for voting for a requested piece of music as shown in FIG. 4 are displayed on a screen of the same. When a button for voting for a requested piece of music is clicked(Step S1), a user information writing screen as shown in FIG. 5 is displayed(Step S2). The user writes and inputs the address, name, age, message and so on the user information writing screen(Step S3) to add a vote to the requested piece of music(Step S4).

After the vote, the time of the request, information on the requested piece of music and user information are stored in the database 5(Step S5); it is determined whether a name has been entered as the user information(Step S6); and, if a name has been written, the time of the request, information on the requested piece of music, the message of the user and so on are transmitted by mail to the studio(computers 7 for the staff) through the management server 6(Step S7). Ranking is made after a vote through such mail transmission(Step S8), and a list is displayed, for example, in the order of the numbers of requests(Step S9). A list is displayed for each genre(folk songs, rock music, popular music, chansons, enka(Japanese songs) or the like).

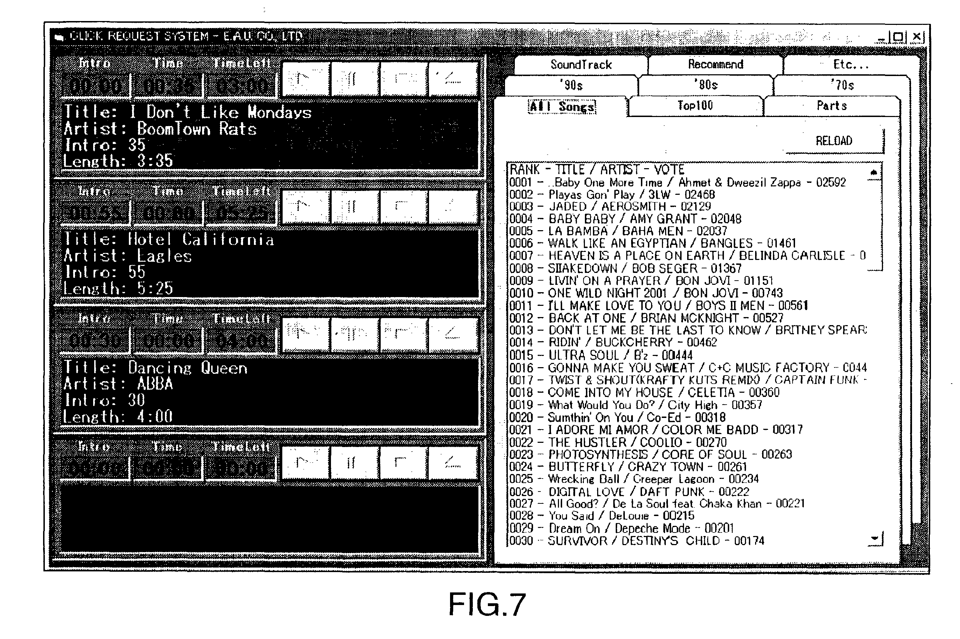

At the computers 7 for the staff to which the mails are transmitted, pieces of music are selected according to the flow chart shown in FIG. 6. Specifically, a list of the latest ranking as shown in FIG. 7 is first displayed(Step S10), and the DJ or production staff selects a piece of music with reference to the list(Step S11). When the piece of music is selected at the computers 7 for the staff, data of the selected piece of music are transmitted to the broadcasting system 8 through the management server 6 and database 5, and the music is set in a player on a computer of the broadcasting system 8(Step S12).

The columns on the right side of FIG. 6 represent a list of requested pieces of music according to descending ranking, and the figures following "Request" represent the votes. The columns on the left side represent a list of pieces of music set for broadcasting which are automatically broadcasted in order starting from the top, although the pieces of music may be arbitrarily broadcasted through a specifying operation. The shaded column on the right side represents a piece of music on the air which can be moved to a left side column by moving the column for the piece of music on the right side column to the left side column.

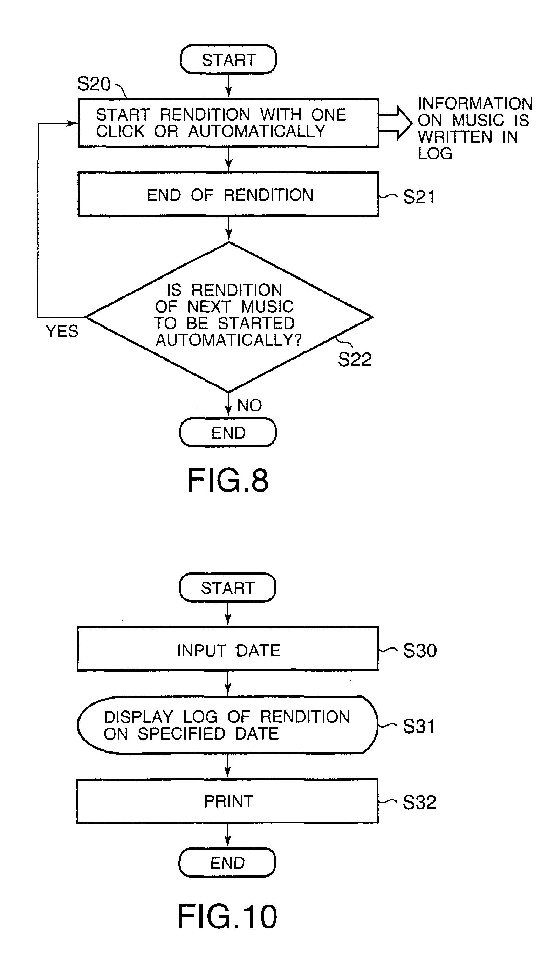

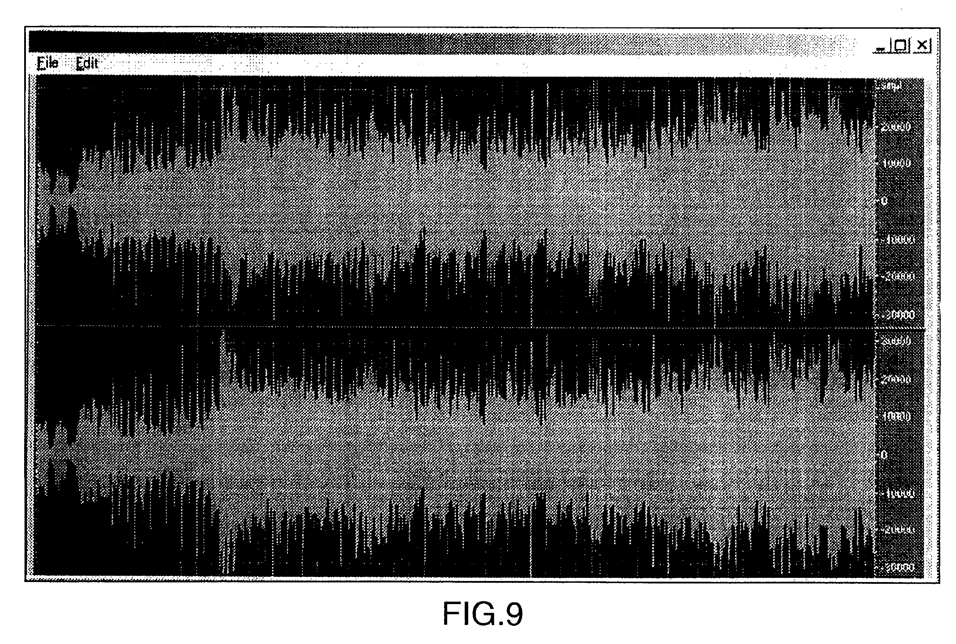

Pieces of music are broadcasted according to the flow chart shown in FIG. 8. Specifically, a rendition of a piece of music is started(put on the air) with one click or automatically(Step S20), and information on the rendered piece of music is written in the database 5. When the rendition is finished(Step S21), it is determined whether the rendition of the next piece of music is to be started automatically or not(Step S22) and, if the rendition is to be automatically started, the process returns to the above-described Step S20 to repeat the above-described operation. FIG. 9 shows examples of waveforms of music registered in the database 5.

FIG. 10 shows an operation of printing data in the database 5 with the printer 9 in which a date is first input (Step S30), and data of renditions on the specified date are displayed(Step S31) and are printed with the printer 9 upon an instruction for printing on the screen.

While the above description has referred to a radio DJ program as an example, it completely equally applies to a request program in a music program or the like on television.

With the system for broadcasting requested pieces of music with an information system according to the present invention as described above, it is possible to provide a rational and efficient system for broadcasting requested pieces of music that is adapted to the information society and to eliminate operators for receiving requests, thereby making it possible also to save labor for computing classified totals of requests and for selecting pieces of music. Further, since requests are made using the internet, it is possible to solve the problem of troubles caused by calls to wrong phone and fax numbers as encountered in the prior art.

It should be understood that many modifications and adaptations of the invention will become apparent to those skilled in the art and it is intended to encompass such obvious modifications and changes in the scope of the claims appended hereto.

## Claims

1. A system for broadcasting requested pieces of music utilizing an information system, **characterized in that** user terminals and a web server are connected through an Internet; a database in which data of pieces of music that can be requested are stored is connected to said web server; a broadcasting system for transmitting sounds, images, pieces of music, texts and so on and a computer for a staff are connected to said database through a management server; said web server receives selections from among said pieces of music requested by said terminals; said management server computes classified totals; pieces of music selected with a click or automatically at said computer for a staff are broadcasted by said broadcasting system.

2. A system for broadcasting requested pieces of music utilizing an information system according to Claim 1, wherein said requests are made using buttons for voting for requested pieces of music displayed on screens of said terminals.

3. A system for broadcasting requested pieces of music utilizing an information system according to Claim 1 or 2, wherein names, addresses, ages and messages are written and inputted at the time of said requests.

4. A system for broadcasting requested pieces of music utilizing an information system according to Claim 3, wherein the times of requests, information on requested pieces of music, messages and so on are transmitted by mail to said computer for the staff when said requests are received.

5. A system for broadcasting requested pieces of music utilizing an information system according to any of Claims 1-4, wherein said classified totals of pieces of music are obtained for each genre and wherein pieces of music in each genre specified by said computer for the staff are broadcasted.

6. A system for broadcasting requested pieces of music utilizing an information system according to Claim 4, wherein the dates and times of the broadcasts and the like are transmitted to the requesters by mail when said pieces of music are broadcasted.

7. A system for broadcasting requested piece of music utilizing an information system according to any of Claims 1-6; wherein a printer is connected to said management server to print data associated with said broadcasted pieces of music.
